# EUROPEAN PATENT SPECIFICATION

(11) **EP 3 987 129 B1**
(45) Date of publication and mention of the grant of the patent: **19.07.2023**
(21) Application number: 20768092.7
(22) Date of filing: 09.08.2020
(51) Int. Cl.: E04H 14/00, E04H 4/12, E04H 4/16, F16L 35/00

(54) **SYSTEM FOR SAFELY CLEANING SWIMMING POOLS AND THE LIKE**
SYSTEM ZUR SICHEREN REINIGUNG VON SCHWIMMBÄDERN UND DERGLEICHEN
SYSTÈME POUR NETTOYER EN TOUTE SÉCURITÉ DES PISCINES ET ANALOGUES

(30) Priority: 21.06.2019 IT 201900012501
(43) Date of publication of application: 27.04.2022
(73) Proprietor: AGNESANI, Roberto, 18019 Vallecrosia (IM) (IT)
(72) Inventor: AGNESANI, Roberto, 18019 Vallecrosia (IM) (IT)
(86) International application number: PCT/IB2020/057500
(87) International publication number: WO 2020/255111

(56) References cited:
- WO-A2-2012/079027
- US-A- 5 107 872
- US-A1- 2006 260 034

## Description

### Technical field

The present invention relates to a safety system which can be conveniently employed in the cleaning of swimming pools but also in equivalent structures such as silos, tanks and functionally similar systems. More particularly, the present invention relates to a system for safely actuating the pumps connected to the aspiration ducts of the nozzles used for cleaning the aforementioned systems and related operating areas.

In the current use, said system allows an operator responsible for system maintenance and cleaning to ensure constant monitoring and surveillance of the site subject to intervention without distancing therefrom, indeed allowing the effective and vigilant presence thereof. The constant presence of the operator in the vicinity of the system promotes the prevention of accidents involving third parties who find themselves even accidentally located at these facilities during the maintenance steps.

### Background art

It is known that underground swimming pools are essentially divided into so-called skimmer swimming pools and so-called infinity swimming pools. It is also known that said swimming pools, both public and private, contain a certain amount of water which must be constantly treated in order to maintain sufficient bathing conditions. This is carried out according to the methods, limits and timing prescribed by law and essentially attributable to the type, size and other benchmarks. For this purpose, each swimming pool generally implements a filtration cycle which involves drawing water from at least one (in older systems) but preferably two or more (according to the most recent and updated safety regulations) bottom outlets which operate together with aspirations precisely called "skimmers" in the case of swimming pools of the same name or, alternatively, from special peripheral manifolds in the case of infinity swimming pools. These aspirations cause water to reach a pump through separate piping provided with the respective valves, pass through a filter and return to the swimming pool through the delivery nozzles. When the water passes through the filter, it obviously releases the dirt and suspended matter which is collected therein. Regardless of the efficiency and automatic nature of said filtration and cleaning system, it must be systematically and regularly supplemented by a further cleaning cycle, preferably daily, of the submerged parts and the bottom of the swimming pool. In particular, the cleaning of the latter may be further automated by means of electric, rather than hydraulic, immersion cleaning robots. Regardless of the complexity and degree of automation of the various systems and devices mentioned above, the cleaning of swimming pools, both skimmer and especially infinity, must necessarily be integrated and supplemented regularly by a manual cleaning of the bottom and all the submerged parts, including the walls.

This manual cleaning is typically carried out by an operator positioned at the pool edge and equipped with an aspiration bottom brush; said brush being controllable by means of a telescopic handle. The aspiration of said brush is obtained by connecting it by means of a floating tube to one or more aspiration nozzles dedicated to cleaning. Said nozzles are provided in a number depending on the size of the swimming pool and are typically installed on the vertical wall of the swimming pool itself at a depth of about 35 cm from the surface of the water. Said cleaning nozzles are also hydraulically connected to one or more aspiration pumps located in a remote utility room dedicated to housing said pumps together with the control and automation circuitry.

The aforementioned cleaning nozzles are for obvious safety reasons necessarily deactivated during bathing and the common use of the swimming pool by the public. In order to activate them, the operator preparing to clean the bottom and submerged parts of the swimming pool must go to the utility room to manually act on the different aspiration valves of the swimming pool in order to suspend the common filtration cycle and have the pumps instead aspirate from the cleaning nozzles. More precisely, the manual manoeuvre which the operator must perform in the utility room consists of opening the valve dedicated to the cleaning nozzles and closing the valves which regulate the normal aspiration by the skimmers or alternatively by the compensation tank depending on the aforementioned types of infinity or skimmer swimming pools.

Once said nozzle(s) are activated, the operator leaves the utility room and returns to the swimming pool where he couples the piping to the cleaning nozzle and with the aid of a floating tube and a bottom cleaning brush provided with a telescopic handle can perform the maintenance of the swimming pool.

Once this intervention has been completed, the operator extracts the cleaning accessories from the water by removing the floating tube and the brush connected to the telescopic handle from the dedicated nozzle and returns to the utility room in order to stop the aspiration from the cleaning nozzles and restore the common filtration cycle. More precisely, the operator acts manually on the valves in the utility room by closing the valve which connects the cleaning nozzles to the pumps and reopening the aspiration valve of the skimmers or compensation tank possibly used depending on the type of swimming pools mentioned above.

In terms of safety, it is therefore crucial that the operator responsible for maintaining the swimming pool regularly performs the aforementioned inversion of the aspirations at the end of the cleaning operations. Particularly for reasons of safety and well-being of the public and not simply for the correct use of the installed systems. In fact, the failure to manually reverse the valves, maintaining the circulation in the cleaning piping, would cause an aspiration flow from the cleaning nozzle which is now disengaged from the brush tube, also intense, exposing bathers accidentally located in the vicinity of said nozzles to dangerous aspirations towards the wall, resulting in physical damage or even death by drowning, as said nozzles are positioned as said at about 35 cm in depth.

Despite the technological evolution of the systems and technologies used for the filtration and maintenance of swimming pools and/or similar or functionally equivalent areas, it is noted that two serious problems remain open and inherent in the safety of swimming pools during the necessary and due maintenance steps:
- Problems of an accidental nature, i.e., strictly dependent on a possible human error of the operator who does not perform or incorrectly performs the operation of reversing the aspiration flows at the end of the scheduled maintenance operations.
- Problems of a structural and systemic nature, i.e., due to the fact that, regardless of the correct performance of the planned operations, the operator during his time in the utility room but also during transfers to and from said room, cannot supervise the bathing area. And this lack of vigilance is all the more serious and dangerous at the preparatory step which precedes the initial connection of the tube to carry out the cleaning but also at the final step, i.e., after the cleaning has taken place and the tube and cleaning tools are removed to be placed in the utility room. In these steps, regardless of the operator's ability, the swimming pool is necessarily unattended and the cleaning nozzles are dangerously set for aspiration.

Finally, it should be noted that the risk of accidental aspiration from submerged nozzles in swimming pools has already been addressed both in terms of legislation and in terms of patents. As far as the legislation is concerned, for example, solutions concerning the bottom aspiration nozzles are known at the date of patent filing, obliging the manufacturer to install at least two bottom aspiration nozzles in order to systematically exclude aspiration accidents. However, said solution cannot be adopted for cleaning/aspiration nozzles which must necessarily be activated individually and independently in order to properly activate bottom and/or similar brushes which are connected thereto.

As far as patents are concerned, various solutions have been proposed over time which can be used as swimming pool cleaning systems and based on cleaning nozzles coordinated with the normal filtration system. Examples include document US5107872 A (Meinke Jonathan E[US],28 April 1992), document WO20121079027 A2 (Hayward Ind Inc[US]; Potucek Kevin[US], 14 June 2012) and document US2006/260034 A1 (Hamza Hassan H [US],23 November 2006). However, all these systems leave many of the safety problems mentioned in the introduction open.

Furthermore, patent solutions are known which have tried to solve the problem of accidental entrapment due to aspiration by nozzles or other submerged aspiration elements of swimming pools; said systems are essentially based on pressure switch technologies as in US6341387(B1) or as in US2006201555 (A1). However, said solutions are strongly subject to mechanical failures, wear and tear due to interference with impurities or dirt which remains trapped in the mechanical activation elements and finally characterized by poor performance repeatability and safety over time.

### Disclosure of the invention

The solution object of the invention aims to solve the aforementioned problems by means of an automatic system which avoids and prevents accidental errors of the maintenance operator and simultaneously allows the physical presence of said operator and his effective supervision near the edge of a swimming pool or a functionally equivalent system subjected to manual maintenance and cleaning.

This is achieved by means of a safe and automatic system for activating the cleaning nozzles which, compared to the state of the art of the systems and procedures typically applied for cleaning swimming pools or the like, safely achieves the following objectives:
- Prevents the operator from moving away from the swimming pool area during all maintenance steps and in particular preventing him from having to go to the utility room.
- Allows aspiration by the cleaning nozzle only in the presence of the operator on the pool edge.
- Reduces the time required to perform maintenance operations.
- Ensures optimal safety conditions for bathers who unforeseeably or accidentally find themselves near the aspiration points of the pool during maintenance operations.

According to the proposed solution, it is intended to obtain a system for the safe conduct of manual cleaning operations of swimming pools suitably provided with one or more cleaning aspiration nozzles, said system being formed by a magnetic contact activation mechanism excitable by inserting the bottom aspiration brush piping into the corresponding cleaning/aspiration nozzle and said activation mechanism being used to remotely control a suitable three-way valve positioned in the utility room of the swimming pool; said valve allowing to automatically reverse the activation/deactivation flows of the cleaning nozzles. Said inversion consisting more precisely in opening the valve dedicated to cleaning and closing the normal aspiration by the skimmers or compensation tank and vice versa.

### Detailed description of the drawings

Further characteristics and advantages of the proposed technical solution will appear more evident in the following description of a preferred but not exclusive embodiment shown by way of example and not of limitation in the accompanying drawings 1/4-4/4, in which:
- Fig.1 shows the overall system with the floating tube not inserted.
- Fig.2 shows the overall system with the floating tube inserted.
- Fig. 3 shows the detail of the magnetic contact activation system comprising a fixed part installed on the cleaning nozzle and a movable part installed on the floating aspiration tube connected to the aspiration brush.
- Fig. 4 shows in detail the generic diagram of the aspiration valves and piping in a traditional system.
- Fig. 5 shows in detail the diagram of the pipelines and the three-way valve according to the proposed invention where the magnetic contact activation system is deactivated.
- Fig. 6 shows in detail the diagram of the pipelines and the three-way valve according to the proposed invention where the magnetic contact activation system is activated.

### Best mode for carrying out the invention

The safety system for cleaning swimming pools and the like comprises a magnetic activation/deactivation apparatus which can be controlled by an operator responsible for cleaning without having to leave the site and simply by inserting or removing the bottom cleaning brush floating tube in an aspiration and cleaning nozzle installed at the peripheral walls of the swimming pool; said magnetic activation/deactivation system being conveniently used to remotely control a three-way hydraulic valve installed in the utility room and used to reverse the activation/deactivation flows of the cleaning nozzles and particularly used to open the cleaning valve and interrupt normal aspiration for recirculating and filtering water by the skimmers or compensation tank and vice versa.

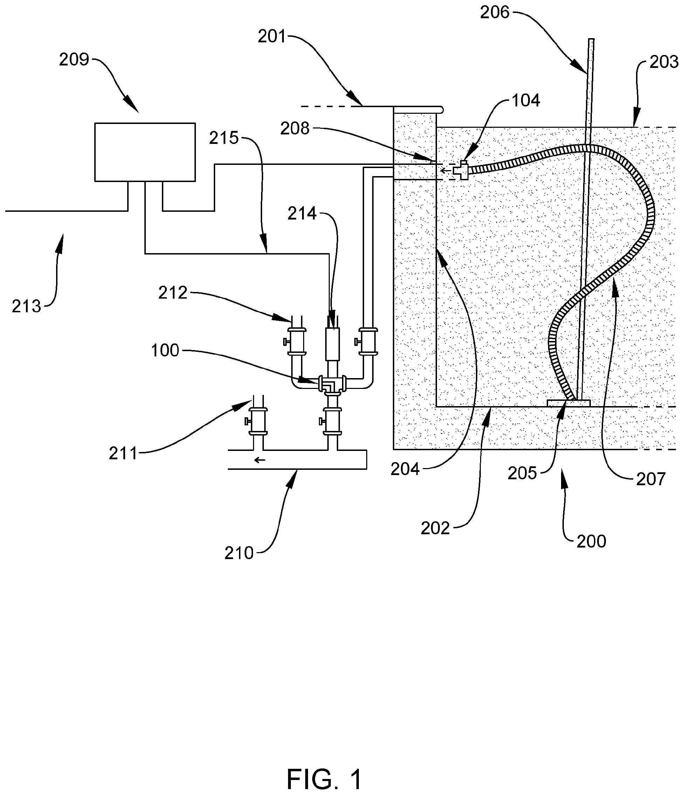

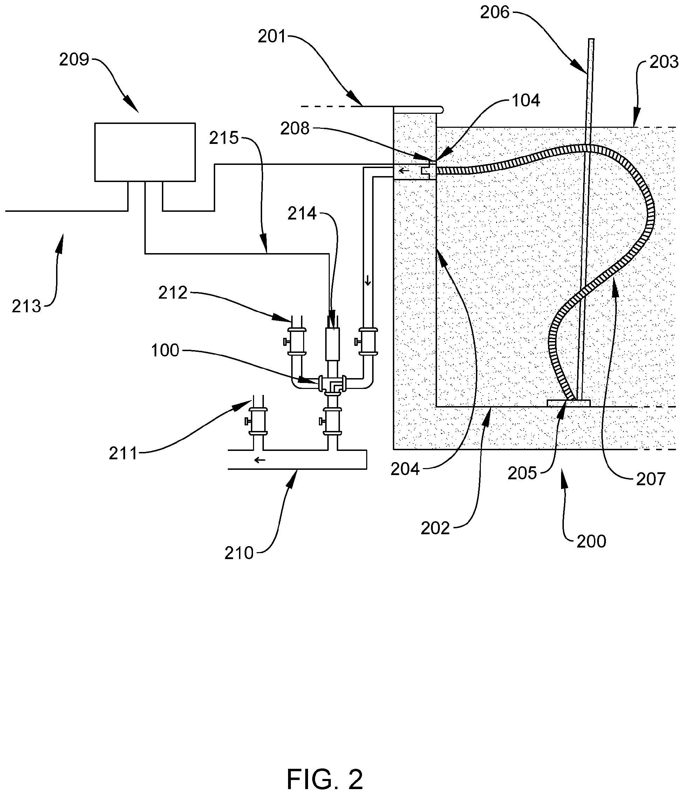

With reference to the accompanying drawings and particularly to Fig.1 and Fig.2, the system of the invention is represented particularly but not exclusively in a typical application area, i.e., a swimming pool (200), shown in lateral section with highlighting of the swimming pool edge (201), the swimming pool bottom (202), the waterline (203) of the water or other liquid contained and a side wall (204) of the swimming pool. According to the proposed invention, a maintenance operator may intervene from said swimming pool edge (201) by means of an aspiration brush (205); said brush being used to clean the swimming pool bottom (202) and all the remaining submerged parts. Said aspiration brush (205) is typically controllable by means of a telescopic handle (206) and is operable by connecting it by means of a floating tube (207) to a cleaning aspiration nozzle (208) installed, for example by means of masonry and/or functionally equivalent fixing methods, on said side wall (204); said aspiration and cleaning nozzle (208) being positioned, preferably but not necessarily, at a depth of about 35 cm from the waterline (203). Also with reference to Fig.1 and Fig.2 of the accompanying drawings, a functional diagram is shown of the electrical, hydraulic and functional connections between said cleaning aspiration nozzle (208) and the control elements and actuators which regulate the aspiration; said elements are typically located in a utility room ancillary to the swimming pool and built at a safe distance. Said utility room typically houses an electrical control panel (209) and a series of valves connecting an aspiration manifold (210) with different hydraulic ducts. Said ducts are used for the aspiration by the bottom (211), by the aspiration and cleaning nozzles (208) or alternatively by the skimmers or compensation tank (212); (this depends on the type and size of the swimming pool (200)). Said electrical control panel (209) is further connected to an electrical power source (213) and is able to control by means of an electromechanical actuator (214) (or a functionally equivalent device) a three-way hydraulic valve (100); said valve being interposed between said aspiration manifold (210) and said aspiration ducts by the aspiration and cleaning nozzle (208) or the skimmers or compensation tank (212) used.

With reference to the accompanying drawings and particularly to Fig.1, the positioning of the three-way hydraulic valve (100) is illustrated in the case where the floating tube (207) is not inserted in the aspiration and cleaning nozzle (208). In said configuration, in the absence of excitation the three-way hydraulic valve (100) normally and by default connects the aspiration manifold (210) with the aspiration valves by the skimmers or the compensation tank (212) and interrupts or does not allow the flow from the aspiration and cleaning nozzle (208). In the absence of excitation, the system therefore remains automatically in the normal water filtering and recirculation condition of the swimming pool (200).

With reference to the accompanying drawings and particularly to Fig.2, the positioning of the three-way hydraulic valve (100) is illustrated in the case where the floating tube (207) is inserted in the aspiration and cleaning nozzle (208). In said situation, a magnetic excitation is generated due to the insertion of the floating tube in the cleaning aspiration nozzle (208), said magnetic excitation is propagated to the electrical control panel (209) by means of appropriate low-voltage wiring (215). As a result of said signal, the three-way hydraulic valve (100) is activated to connect the aspiration manifold (210) with the aspiration and cleaning duct (208); simultaneously, said three-way hydraulic valve (100) interrupts the aspiration flow of the ducts connected to the skimmers or the compensation tank (212).

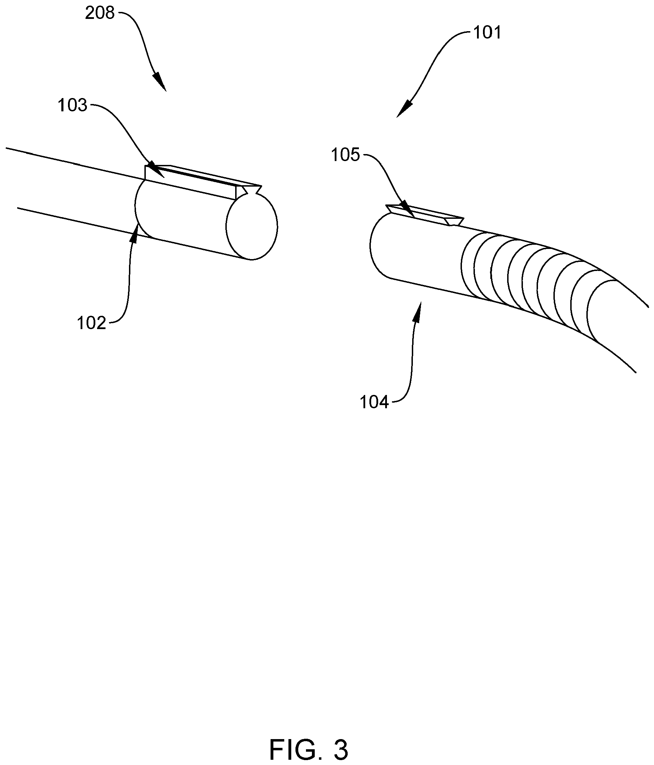

With reference to the accompanying drawings and particularly to Fig. 3, the magnetic activation system (101) consists of a hydraulic fitting made by way of example but not limited to ABS material (Acrylonitrile - Butadiene - Styrol). Said fitting is characterized by a female-male hydraulic coupling comprising a fixed part comprising a hydraulic fitting (102) equipped with a contact or magnetic switch (103) and a corresponding movable part comprising a hydraulic fitting (104) characterized by a magnet (105) intended to excite said contact or magnetic switch (103) if said contact is inserted in the corresponding seat of said hydraulic fitting (102). Said fixed part with hydraulic fitting (102) is included in the cleaning aspiration nozzle (208), while said movable part with hydraulic fitting (104) is positioned at the free end of the floating tube (207). The coupling preferably but not necessarily of the female-male type of said fixed and movable parts or by means of the hydraulic fittings (102) and (104) takes place according to a predetermined orientation in order to avoid insertion errors and simultaneously ensure the solidity of the joint. The magnet (105) mounted in the hydraulic fitting (104) of the movable part excites the electrical contact installed in the hydraulic fitting (102) of the submerged fixed part contained in the cleaning aspiration nozzle (208). The electrical contact is excited in absolute safety thanks to the magnetic approach. Said contact feeds, through a low-voltage wiring (215), a coil which closes the circuit in the electrical control panel (209) and operates the electromechanical actuator (214) of the three-way hydraulic valve (100).

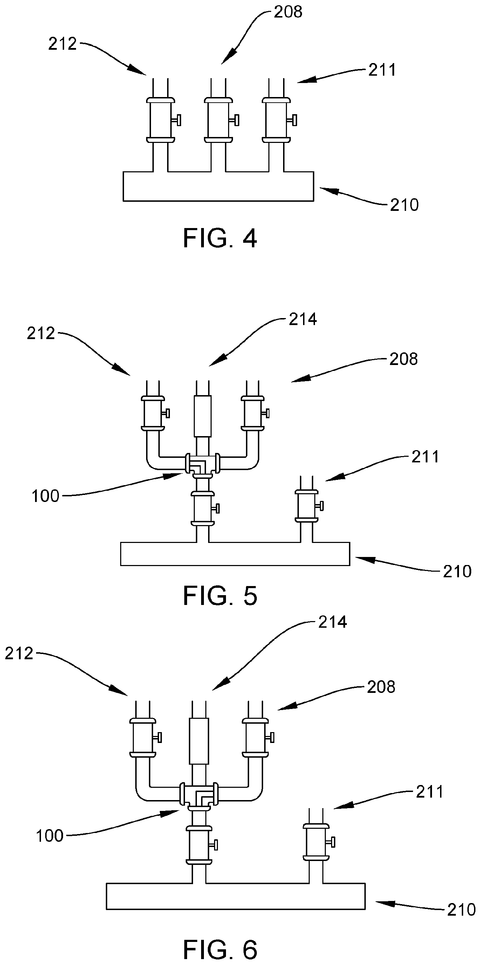

With reference to the accompanying drawings, and particularly to Fig. 4, the typical structure of a traditional system is further illustrated in more detail, in which an aspiration manifold is typically placed in connection with the ducts which allow aspiration by the bottom, the aspiration and cleaning nozzle and the skimmers or compensation tank used in a swimming pool (200) through a valve system.

With reference to the accompanying drawings and in particular to Figures 5 and 6, the behaviour of the three-way hydraulic valve (100) and the electromechanical actuator (214) thereof is further illustrated in more detail depending on whether or not the floating tube (207) is inserted in the aspiration and cleaning nozzle (208). In particular, the indications relating to the deviation of the flow from the aspiration manifold (210) with respect to the aspiration ducts of the cleaning nozzle (208) and the skimmers or compensation tank (212) in the two aforementioned cases are provided.

### Industrial Applicability

The system for the safe cleaning of swimming pools or the like referred to in the invention, can preferably be applied to both infinity swimming pools and newly-built skimmers but also to existing swimming pools through appropriate modifications and allows for considerable advantages, including:
- Automatically excluding the possibility of aspiration accidents by the submerged cleaning nozzles present.
- Providing an activation system comprising a movable fitting and a wall-mounted fitting in the swimming pool wall; said elements being electrically protected while operating under immersion and said elements being characterized by ease of operation, reliability and strength.
- Allowing the vigilant and constant presence of the maintenance operator near the swimming pool edge in case of accidental and unplanned entrances of the public during maintenance operations.
- Speeding up maintenance operations by eliminating the obligation for the operator to go to the utility room multiple times for the manual reversal of the valves which regulate the aspiration by the nozzles.

The invention may be obtained with different technical equivalents which are however functional for the same purpose, with supplementary materials or devices fit for the applicative scope, the geometric shapes of the involved parts may be varied while maintaining the above-mentioned functionalities and constructive types, all without thereby departing from the scope of the present invention, as defined by the appended claims.

## Claims

1. Safety system for cleaning the bottom (202) and side walls (204) of a swimming pool (200) subjected to cleaning by means of an aspiration brush (205), said aspiration brush (205) being controlled from the edge (201) of said swimming pool (200) by means of a telescopic handle (206); said safety apparatus for cleaning swimming pools **further comprising:**
• an aspiration and cleaning nozzle (208) provided with a hydraulic fitting (102) equipped with a magnetic switch (103), said magnetic switch being electrically connected to an electrical control panel (209);
• a floating tube (207) connected to said aspiration brush (205), whereby a free end of said floating tube (207) is provided with a hydraulic fitting (104) equipped with a magnet (105), said magnet (105) and said hydraulic fitting (104) having a shape corresponding to said magnetic switch (103) and said hydraulic fitting (102) of the the aspiration and cleaning nozzle (208);
• a three-way hydraulic valve (100) connected to the aspiration manifold (210) of said swimming pool (200), said three-way hydraulic valve (100) being able to switch the aspiration between the aspiration duct connected to the skimmers or the compensation tank (212) and the aspiration and cleaning nozzle (208) of said swimming pool (200);
• an electromechanical actuator (214) able to operate said three-way hydraulic valve (100); said electromechanical actuator (214) being connected to said electrical panel (209) by a low-voltage wiring (215); said actuator being controlled by said magnetic switch (103).

2. Safety system for cleaning the bottom (202) and side walls (204) of a swimming pool (200) according to claim 1, wherein said magnetic switch (103) is activated by said hydraulic fitting (104) by means of said magnet (105) when said magnet (105) is inserted in the corresponding seat of said hydraulic fitting (102);

3. Safety system for cleaning the bottom (202) and side walls (204) of a swimming pool (200) according to claim 1, wherein said three-way hydraulic valve (100) is **characterized by** a rest position in which the aspiration manifold (210) is connected with the aspiration duct of the skimmers or the compensation tank (212).

4. Safety system for cleaning the bottom (202) and side walls (204) of a swimming pool (200) according to claim 1, wherein said electromechanical actuator (214) operates said three-way hydraulic valve (100) and connects the aspiration manifold (210) with the submerged aspiration and cleaning nozzle (208).

5. Safety system for cleaning the bottom (202) and side walls (204) of a swimming pool (200) according to claim 1, wherein said floating tube (207) is provided with means for the connection with robots for cleaning swimming pools.

6. Safety system for cleaning the bottom (202) and side walls (204) of a swimming pool (200) according to claim 1, wherein said aspiration and cleaning nozzle (208) is provided with a hydraulic fitting (102) equipped with further magnetic switches (103); said switches (103) being activated by further magnets (105); said further magnetic switches (103) being used to control further actuators.

## Patentansprüche

1. Sicherheitssystem zum Reinigen des Bodens (202) und der Seitenwände (204) eines Schwimmbeckens (200), das einer Reinigung mittels einer Saugbürste (205) unterzogen wird, wobei die Saugbürste (205) von dem Rand (201) des Schwimmbeckens (200) mittels eines Teleskopgriffs (206) gesteuert wird; wobei die Sicherheitsvorrichtung zum Reinigen von Schwimmbecken **ferner Folgendes umfasst:**
• eine Saug- und Reinigungsdüse (208), die mit einem hydraulischen Anschlussstück (102) versehen ist, das mit einem Magnetschalter (103) ausgestattet ist, wobei der Magnetschalter elektrisch mit einer elektrischen Steuertafel (209) verbunden ist;
• ein schwimmendes Rohr (207), das mit der Saugbürste (205) verbunden ist, wobei ein freies Ende des schwimmenden Rohrs (207) mit einem hydraulischen Anschlussstück (104) versehen ist, das mit einem Magnet (105) ausgestattet ist, wobei der Magnet (105) und das hydraulische Anschlussstück (104) eine Form aufweisen, die dem Magnetschalter (103) und dem hydraulischen Anschlussstück (102) der Saug- und Reinigungsdüse (208) entspricht;
• ein Dreiwegehydraulikventil (100), das mit dem Saugverteiler (210) des Schwimmbeckens (200) verbunden ist, wobei das Dreiwegehydraulikventil (100) in der Lage ist, das Saugen zwischen der Saugleitung, die mit den Skimmern verbunden ist, oder dem Ausgleichstank (212) und der Saug- und Reinigungsdüse (208) des Schwimmbeckens (200) umzuschalten;
• einen elektromechanischen Aktor (214), der in der Lage ist, das DreiwegeHydraulikventil (100) zu betätigen; wobei der elektromechanische Aktor (214) durch eine Niederspannungsverdrahtung (215) mit der elektrischen Steuertafel (209) verbunden ist; wobei der Aktor von dem Magnetschalter (103) gesteuert wird.

2. Sicherheitssystem zum Reinigen des Bodens (202) und der Seitenwände (204) eines Schwimmbeckens (200) nach Anspruch 1, wobei der Magnetschalter (103) von dem hydraulischen Anschlussstück (104) mittels des Magneten (105) aktiviert wird, wenn der Magnet (105) in den entsprechenden Sitz des hydraulischen Anschlussstücks (102) eingesetzt ist;

3. Sicherheitssystem zum Reinigen des Bodens (202) und der Seitenwände (204) eines Schwimmbeckens (200) nach Anspruch 1, wobei das Dreiwegehydraulikventil (100) von einer Ruheposition gekennzeichnet ist, in der der Saugverteiler (210) mit der Saugleitung der Skimmer oder dem Ausgleichstank (212) verbunden ist.

4. Sicherheitssystem zum Reinigen des Bodens (202) und der Seitenwände (204) eines Schwimmbeckens (200) nach Anspruch 1, wobei der elektromechanische Aktuator (214) das Dreiwegehydraulikventil (100) betätigt und den Saugverteiler (210) mit der eingetauchten Saug- und Reinigungsdüse (208) verbindet.

5. Sicherheitssystem zum Reinigen des Bodens (202) und der Seitenwände (204) eines Schwimmbeckens (200) nach Anspruch 1, wobei das schwimmende Rohr (207) mit Mitteln zur Verbindung mit Robotern zum Reinigen von Schwimmbecken versehen ist.

6. Sicherheitssystem zum Reinigen des Bodens (202) und der Seitenwände (204) eines Schwimmbeckens (200) nach Anspruch 1, wobei die Saug- und Reinigungsdüse (208) mit einem hydraulischen Anschlussstück (102) versehen ist, das mit weiteren Magnetschaltern (103) ausgestattet ist; wobei die Schalter (103) von weiteren Magnete (105) aktiviert werden; wobei die weiteren Magnetschalter (103) verwendet werden, um weitere Aktoren zu steuern.

## Revendications

1. Système de sécurité pour nettoyer le fond (202) et les parois latérales (204) d'une piscine (200) soumise à un nettoyage au moyen d'une brosse d'aspiration (205), ladite brosse d'aspiration (205) étant commandée à partir du bord (201) de ladite piscine (200) au moyen d'une poignée télescopique (206) ; ledit appareil de sécurité pour nettoyer des piscines **comprenant en outre** :
• une buse d'aspiration et de nettoyage (208) pourvue d'un raccord hydraulique (102) équipé d'un commutateur magnétique (103), ledit commutateur magnétique étant connecté électriquement à un panneau de commande électrique (209) ;
• un tube flottant (207) relié à ladite brosse d'aspiration (205), une extrémité libre dudit tube flottant (207) étant pourvue d'un raccord hydraulique (104) équipé d'un aimant (105), ledit aimant (105) et ledit raccord hydraulique (104) ayant une forme correspondant audit commutateur magnétique (103) et audit raccord hydraulique (102) de la buse d'aspiration et de nettoyage (208) ;
• une vanne hydraulique à trois voies (100) reliée au collecteur d'aspiration (210) de ladite piscine (200), ladite vanne hydraulique à trois voies (100) étant apte à commuter l'aspiration entre le conduit d'aspiration relié aux écumoires ou au réservoir de compensation (212) et la buse d'aspiration et de nettoyage (208) de ladite piscine (200) ;
• un actionneur électromécanique (214) apte à actionner ladite vanne hydraulique à trois voies (100) ; ledit actionneur électromécanique (214) étant relié audit panneau électrique (209) par un câblage basse tension (215) ; ledit actionneur étant commandé par ledit interrupteur magnétique (103).

2. Système de sécurité pour nettoyer le fond (202) et les parois latérales (204) d'une piscine (200) selon la revendication 1, dans lequel ledit commutateur magnétique (103) est activé par ledit raccord hydraulique (104) au moyen dudit aimant (105) lorsque ledit aimant (105) est inséré dans le siège correspondant dudit raccord hydraulique (102) ;

3. Système de sécurité pour nettoyer le fond (202) et les parois latérales (204) d'une piscine (200) selon la revendication 1, dans lequel ladite vanne hydraulique à trois voies (100) est **caractérisée par** une position de repos dans laquelle le collecteur d'aspiration (210) est relié au conduit d'aspiration des écumoires ou au réservoir de compensation (212).

4. Système de sécurité pour nettoyer le fond (202) et les parois latérales (204) d'une piscine (200) selon la revendication 1, dans lequel ledit actionneur électromécanique (214) actionne ladite vanne hydraulique à trois voies (100) et relie le collecteur d'aspiration (210) à la buse d'aspiration et de nettoyage immergée (208).

5. Système de sécurité pour nettoyer le fond (202) et les parois latérales (204) d'une piscine (200) selon la revendication 1, dans lequel ledit tube flottant (207) est pourvu de moyens pour la connexion avec des robots pour nettoyer les piscines.

6. Système de sécurité pour nettoyer le fond (202) et les parois latérales (204) d'une piscine (200) selon la revendication 1, dans lequel ladite buse d'aspiration et de nettoyage (208) est pourvue d'un raccord hydraulique (102) équipé d'autres commutateurs magnétiques (103) ; lesdits commutateurs (103) étant activés par d'autres aimants (105) ; lesdits autres commutateurs magnétiques (103) étant utilisés pour commander d'autres actionneurs.
